# FASCICULE DE BREVET EUROPEEN

(11) **EP 0 291 613 B1**
(45) Date de publication et mention de la délivrance du brevet: **24.08.1994**
(21) Numéro de dépôt: 87402420.1
(22) Date de dépôt: 27.10.1987
(51) Int. Cl.: G06F 9/38, G06F 15/76

(54) **Processeur comportant une pluralité d'étages reliés en série**
Prozessor mit einer Mehrheit von seriell geschalteten Stufen
Processor with a plurality of serially connected stages

(30) Priorité: 31.10.1986 FR 8615239
(43) Date de publication de la demande: 23.11.1988
(73) Titulaire: THOMSON-CSF, 75008 Paris (FR)
(72) Inventeur: Demeure, Alain, F-75008 Paris (FR); De Corlieu, Patrick, F-75008 Paris (FR); Legendre, Claude, F-75008 Paris (FR)
(74) Mandataire: Benoit, Monique

(56) Documents cités:
- EP-A- 0 184 494
- FR-A- 2 536 884
- GB-A- 2 157 860
- Computer Structure: Principles and Examples, D.P. Siwiorek et al., McGraw-Hill, 1983, pages 753-757.
- The architecture of pipelined Computers, P.M. Kogge, McGraw-Hill, 1981, pages 39-44.

## Description

L'invention concerne principalement un processeur de calcul comportant une pluralité d'étages reliés en série, un calculateur et un procédé de calcul mettant en oeuvre ledit processeur.

Il est connu d'utiliser des processeurs élémentaires comme par exemple les additionneurs ou les multiplicateurs utilisant une structure mettant en oeuvre une pluralité d'étages combinatoires reliés en série. Habituellement les étages combinatoires sont connectés en série à travers des registres permettant la resynchronisation du dispositif avec une horloge.Un tel processeur est appelé processeur pipe-line.

Le temps de calcul pour une donnée pour un processeur pipe-line est égal au temps de traversée de tous les étages reliés en série. Par exemple un additionneur à quatre étages pipe-line délivre la somme des deux données présentées sur ces entrées au bout de quatre cycles d'horloge. Ainsi, si on présente à un tel processeur des données à traiter à chaque cycle d'horloge la puissance des calculs globale, une fois le processus amorcé est égale à la puissance des calculs de chaque étage du pipe-line multipliée par le nombre d'étage pipe-line.

Malheureusement, dans la pratique, il est très rare de pouvoir présenter des données à traiter à chaque cycle d'horloge à un processeur élémentaire pipe-line. Dans le meilleur des cas, on arrive à présenter à un tel processeur un vecteur long c'est-à-dire des suites finies des données à traiter. L'efficacité, c'est-à-dire la puissance de calcul d'un tel processeur diminue très rapidement au fur et à mesure qu'on diminue la longueur des vecteurs qu'on présente au processeur. Quand on s'approche des vecteurs comportant un seul jeu des données à traiter la puissance des calculs du processeur élémentaire tend vers la puissance de calcul d'un étage du pipe-line

On connaît d'après le document : "Computer Structures : Principles and Examples", DP Siwiorek et al, Mc Graw-Hill, 1983, pages 753, 757" un processeur à structure pipe-line et parallèle, mais il n'est pas question d'augmenter la capacité de traitement de ce processeur connu.

Le processeur conforme à l'invention est divulgué dans la revendication 1.

Le processeur selon la présente invention comporte au moins une structure à n étages pipe-line reliés en série. Pour éviter les inconvénients des dispositifs de type connu le processeur selon l'invention comporte un mode de fonctionnement lui permettant de se comporter comme n processeurs différents, n étant le nombre d'étages du pipe-line. Les n processeurs n'ayant pas d'existence physique, seront appelés, dans la suite de ce brevet processeurs virtuels. Chaque processeur virtuel peut traiter un programme indépendant de ceux traités par les n-1 autres processeurs virtuels.

Le dispositif selon la présente invention facilite l'exécution simultanée de plusieurs taches ou la décomposition d'un calcul compliqué en une pluralité de calculs simples. Ceci sera particulièrement apprécié pour les calculs mis en oeuvre dans le traitement du signal.

D'autre part, la longueur apparente pour le processeur selon la présente invention des vecteurs est égale à n fois la longueur réelle. Ainsi dans le cas de l'utilisation des vecteurs courts la puissance de calcul du dispositif selon la présente invention est nettement supérieure à un dispositif de type classique comportant le même nombre d'étages ayant le même cycle d'horloge.

L'invention a aussi pour objet un procédé d'exécution de calculs utilisant un processeur comportant n étages pipe-lines reliés en série et une mémoire. Le procédé de l'invention est un procédé d'exécution de calculs à l'aide d'un processeur comme divulgué dans la revendication 7.

L'invention sera mieux comprise au moyen de la description ci-après et des figures annexées données comme des exemples non limitatifs parmi lesquels :
- la figure 1 est un schéma d'un premier exemple de réalisation d'un processeur selon l'invention ;
- la figure 2 est un chronogramme de fonctionnement d'un processeur selon l'invention ;
- la figure 3 est un schéma d'un second exemple de réalisation d'un processeur selon l'invention ;
- la figure 4 est un chronogramme de fonctionnement du processeur de la figure 3 ;
- la figure 5 est un troisième exemple de réalisation du processeur selon l'invention ;
- la figure 6 est un schéma explicatif des transferts des données ;
- la figure 7 est un schéma illustrant le dispositif de communication externe du processeur selon l'invention ;
- la figure 8 est un schéma du dispositif de communication externe du dispositif selon l'invention ;
- la figure 9 est un schéma illustrant une association des processeurs selon l'invention ;
- la figure 10 est un schéma illustrant une association des processeurs selon l'invention ;
- la figure 11 est une quatrième variante de réalisation du processeur selon l'invention.

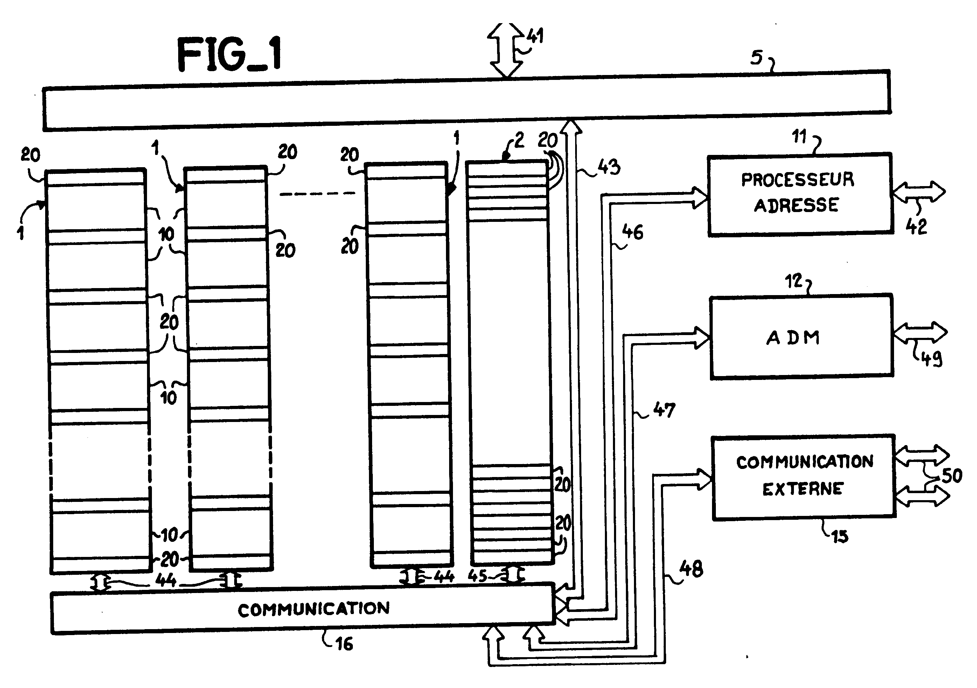

Sur les figures 1 à 11 on a utilisé les mêmes références pour désigner les mêmes éléments.

Sur les chronogrammes on a utiliser les mêmes références pour désigner les impulsions et les cycles d'horloge.

Sur la figure 1 on peut voir, un processeur de calcul comportant au moins un processeur élémentaire 1 comprenant plusieurs étages 10 pipe-line placés en série. Le processeur comporte en outre un interface mémoire 5 et un processeur d'adresse 11. Avantageusement, le processeur comporte un banc 2 de registres 20.

Chaque processeur élémentaire pipe-line se compose d'une succession de registres 20 et des parties combinatoires 10. Les processeurs élémentaires 1 sont par exemple des additionneurs multiplicateurs, des unités arithmétiques et logiques (ULA) des multiplicateurs accumulateurs ou des microprocesseurs. Lors de la conception selon les calculs que l'on désire pouvoir effectuer, on construit le processeur selon l'invention avec les processeurs élémentaires nécessaires. Il est possible d'utiliser une pluralité de processeurs élémentaires 1 du même type.

Le processeur d'adresse 11 permet en adressant une mémoire externe de fournir aux processeurs élémentaires 1 les données à traiter. La mémoire vive est organisée en n pages mémoires, correspondant aux n processeurs virtuels réalisés par le processeur selon l'invention. Le processeur d'adresse 11 fournit par l'intermédiaire d'un bus d'adresse 42, successivement :
- l'adresse de la première donnée du premier processeur virtuel ;
- l'adresse de la première donnée du second processeur virtuel ;
- l'adresse de la première donnée du troisième processeur virtuel ;
   .
   .
   .
- l'adresse de la première donnée du i^{ème} processeur virtuel ;
   .
   .
   .
- l'adresse de la première donnée du n^{ième} processeur virtuel ;
- l'adresse de la deuxième donnée du premier processeur virtuel ;
- l'adresse de la deuxième donnée du deuxième processeur virtuel ;
   .
   .
   .
- l'adresse de la deuxième donnée du n^{ième} processeur virtuel ;
- l'adresse de la troisième donnée du premier processeur virtuel ;
- l'adresse de la troisième donnée du troisième processeur virtuel ; etc...

De cette manière, le processeur de calcul selon la présente invention présente une grande puissance de calcul même en présence des vecteurs à traiter courts. La mémoire vive non représentée sur la figure 1 fournit aux processeurs élémentaires 1 par l'intermédiaire d'un bus 41 et de l'interface 5 des données nécessaires au traitement désiré. Par exemple la mémoire, non représentée, fournit deux données par additionneur et par multiplicateur.

Dans une variante de réalisation du dispositif selon l'invention le processeur comporte un dispositif de communication 16 permettant de choisir le ou les processeurs élémentaires 1 connectés à l'interface 5. Avantageusement, le dispositif de communication 16 permet les échanges d'informations entre le processeur élémentaire 1, le banc de registre 2 et le processeur d'adresse 11. Les processeurs élémentaires 1 sont reliés au dispositif de communication 16 par l'intermédiaire des bus 44. Le banc 2 des registres 20 est relié au dispositif de communication 16 par l'intermédiaire d'un bus 45. Le processeur d'adresse est relié au dispositif de communication 16 par l'intermédaire d'un bus 46. L'interface mémoire 5 est relié au dispositif de communication 16 par l'intermédiaire d'un bus 43.

Avantageusement, le processeur selon la présente invention comporte un processeur d'accès direct mémoire 12 (ADM). Le processeur d'accès direct mémoire 12 permet de lire et d'écrire dans la mémoire affectée au processeur selon l'invention pendant que ledit processeur exécute des calculs. Le processeur d'accès direct mémoire 12 est relié par un bus 47 au dispositif de communication 16 et par un bus 49 aux mémoires vives.

Avantageusement, le dispositif selon la présente invention comporte un dispositif de communication externe 15. Par exemple le dispositif de communication externe 15 est un interface avec au moins un bus 50 permettant un échange de données avec l'extérieur, par exemple avec d'autres processeurs identiques. Le dispositif de communication externe 15 est relié par un bus 48 au dispositif de communication 16.

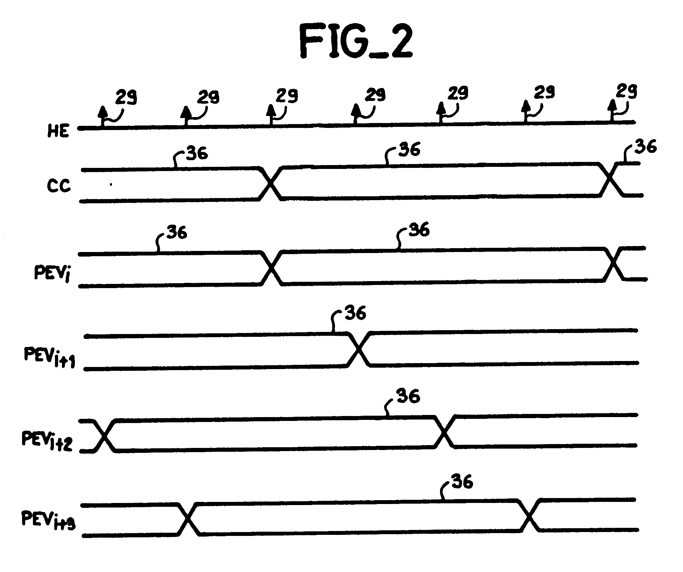

Sur la figure 2, on peut voir le chronogramme de fonctionnement d'un processeur selon l'invention comportant quatre étages pipe-line. Les quatre étages pipe-line correspondent par exemple à quatre registres reliés par trois parties combinatoires.

Le processeur est synchronisé par une horloge HE dont les impulsions 29 sont régulièrement espacées dans le temps. Un cycle de calcul complet CC dure donc quatre cycles d'horloge 29. Sur la figure 2, un cycle de calcul CC débute à la troisième impulsion d'horloge 29. Ceci correspond au début du calcul par le premier processeur élémentaire virtuel PEVᵢ. La durée 36 nécessaire au calcul est égale à quatre cycles d'horloge 29. Ainsi le premier processeur élémentaire virtuel délivrera son résultat à la septième impulsion 29 d'horloge.

Le calcul du second processeur élémentaire virtuel PEVᵢ₊₁ débute une impulsion d'horloge 29 après le début du calcul par le PEVᵢ , c'est-à-dire dans l'exemple de la figure 2 à la quatrième impulsion d'horloge 29. Ce calcul sera terminé à la huitième impulsion d'horloge 29 (non représentée).

Le calcul du troisième processeur élémentaire vectoriel PEVᵢ₊₂ débute à la cinquième impulsion d'horloge 29. Ce calcul se termine à la neuvième impulsion d'horloge 29 (non représentée).

Le calcul du quatrième processeur élémentaire virtuel PEVᵢ₊₃ débute à la sixième impulsion d'horloge 29. Ce calcul se termine à la dixième impulsion d'horloge 29 (non représentée sur la figure 2).

Le calcul suivant du premier processeur élémentaire virtuel PEVᵢ débute à la septième impulsion d'horloge 29. Ce calcul se termine à la onzième impulsion d'horloge 29 et ainsi de suite.

Ainsi, bien qu'une durée de calcul 36 dure quatre cycles d'horloge, un résultat est délivré par un des processeurs élémentaire virtuel à chaque impulsion d'horloge 29.

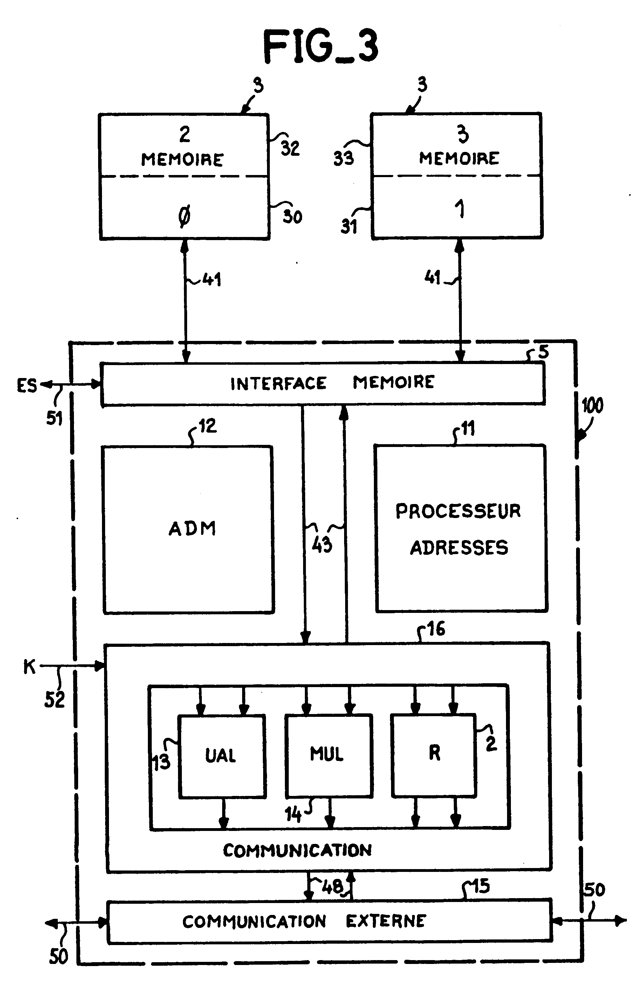

Sur la figure 3, on peut voir un exemple de réalisation d'un processeur 100 selon l'invention. Pour la clarté de la figure seuls les bus de donnée ont été représentés. L'exemple de réalisation du processeur 100 selon l'invention illustré sur la figure 3 comporte une unité arithmétique et logique 13, un multiplicateur 14, un banc de registre 2. Un dispositif de communication 16 permet de fournir aux entrées de l'unité arithmétique et logique 13, du multiplicateur 14 et du banc de registre 2 des données nécessaires aux calculs. De même, le dispositif de communication 16 permet de recueillir le résultat des calculs des unités arithmétiques et logiques 13 et du multiplicateur 14 ainsi que de lire les données stockées dans les registres 2 du banc de registres 2. D'autre part, le dispositif de communication 16 est relié par un bus birectionnel 43 à l'interface mémoire 5, par un bus 52 à un dispositif, non illustré, susceptible de fournir des constantes nécessaires aux calculs et aux dispositifs de communication externes 15 par un bus bidirectionnel 48. Le dispositif de communication externe 15 est par exemple un interface de communication permettant de relier en anneaux une pluralité de processeurs 100 selon l'invention. Par exemple chaque processeur 100 est relié à son voisin de gauche et de droite. L'information peut se propager de proche en proche jusqu'au processeur auquel elle est destinée. Un tel dispositif est décrit dans le brevet français N° 83 15649.

Le processeur 100 selon la présente invention comporte avantageusement un circuit d'accès direct mémoire 12, un processeur d'adresse 11. Un interface mémoire 5 permet d'accéder à une mémoire vive 3 (RAM en terminologie anglo-saxonne). La mémoire 3 est avantageusement composée de deux bancs mémoire reliés par des bus 41 à l'interface 5. Chacun des bancs mémoire est avantageusement partagé en pages mémoire, le nombre total des pages de mémoire étant avantageusement égal au nombre de processeurs virtuels équivalent au processeur 100. Dans l'exemple illustré sur la figure 3, le processeur 100 étant équivalent à quatre processeurs virtuels chaque banc mémoire 3 comporte deux pages mémoire 30 et 32 d'une part, 31 et 33 d'autre part.

Pour pouvoir accéder à une donnée en mémoire 3, le processeur d'adresse 11 transmet par le bus d'adresse, non représenté, l'adresse de la donnée à lire. La donnée est transmise par l'intermédiaire du bus 41, de l'interface mémoire 5, et des bus 43 au dispositif de communication 16. Le dispositif de communication 16 transmet la donnée vers l'unité arithmétique et logique 13, le multiplicateur 14, un des registres 20 du banc de registre 2 et/ou le dispositif de communication externe 15.

L'interface mémoire 5 est d'autre part relié à un bus d'entrée sortie 51.

Le dispositif d'accès direct mémoire 12 permet par l'intermédiaire du bus 51 de l'interface mémoire 5 de lire ou d'écrire en mémoire 3 sans passer par le dispositif de communication 16. Le partage de la mémoire vive 3 en deux bancs de mémoire permet d'effectuer les accès directs mémoire dans un banc de mémoire pendant que l'autre banc de mémoire est en train d'échanger des informations par l'intermédiaire du dispositif de communication 16 ou d'effectuer simultanément deux accès mémoire par le processeur 100 suivis de deux accès directs mémoire.

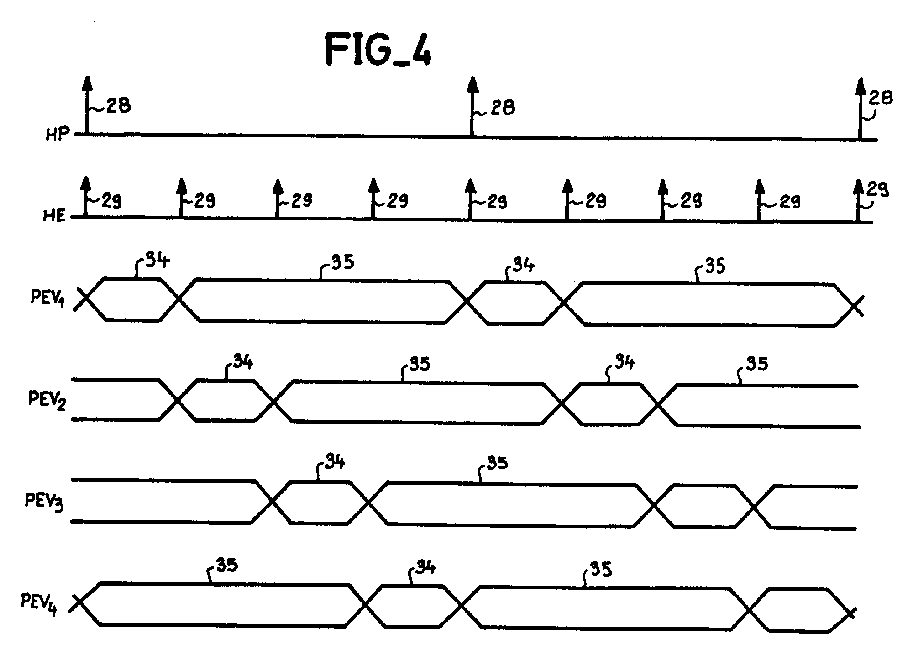

Sur la figure 4, on peut voir un chronogramme de fonctionnement du processeur de la figure 3. Les impulsions d'horloge 29 correspondent à la traversée d'un étage pipe-line. Toutes les quatre impulsions d'horloge 29 est émise une impulsion d'horloge 28 correspondant à un cycle de calcul complet. Lors de la première impulsion d'horloge 29 le premier processeur élémentaire virtuel PEV₁ effectue un accès aux données 34 par l'intermédiaire du dispositif de communication 16. Pendant les trois impulsions d'horloge 29 suivantes le premier processeur élémentaire virtuel PEV₁ effectue le calcul 35. A la cinquième impulsion d'horloge 29, correspondant à la deuxième impulsion d'horloge 28, le premier processeur élémentaire virtuel PEV₁ ayant commencé un nouveau cycle de calcul, effectue à nouveau l'accès aux données 34 par l'intermédiaire du dispositif de communication 16. Dans les trois cycles d'horloge 29 suivants terminant le deuxième cycle d'horloge 28 le processeur élémentaire virtuel 1 termine le second calcul.

Pendant le deuxième cycle d'horloge 29 du premier cycle d'horloge 28 le deuxième processeur élémentaire virtuel PEV₂ effectue l'accès aux données 34 par l'intermédiaire du dispositif de communication 16. Pendant les trois cycles d'horloge 29 suivants le deuxième processeur élémentaire virtuel PEV₂ effectue les calculs 35. Le cycle complet des calculs du deuxième processeur élémentaire virtuel se termine à la deuxième impulsion d'horloge 29 du deuxième cycle d'horloge 28. Durant le deuxième cycle d'horloge 29 du deuxième cycle d'horloge 28 le deuxième processeur élémentaire virtuel PEV₂ ayant commencé un nouveau cycle de calcul effectue un accès aux données 34 par l'intermédiaire du dispositif de communication 16 et ainsi de suite.

Au troisième cycle d'horloge 29 du premier cycle d'horloge 28 le troisième processeur élémentaire virtuel PEV₃ effectue un accès aux données 34 par l'intermédiaire du dispositif de communication 16. Pendant les trois cycles d'horloge 29 suivants le troisième processeur élémentaire virtuel effectue les calculs 35. A la fin du cycle de calcul à la troisième impulsion d'horloge 29 du second cycle d'horloge 28 le troisième processeur élémentaire virtuel PEV₃ effectue un accès aux données 34 correspondant au cycle de calcul suivant et ainsi de suite.

Durant le quatrième cycle d'horloge 29 du premier cycle d'horloge 28 le quatrième processeur élémentaire virtuel PEV₄ effectue un accès aux données 34 par l'intermédiaire du dispositif de communication 16. Pendant les trois cycles d'horloge 29 suivants le quatrième processeur élémentaire virtuel PEV₄ effectue les calculs 35. Durant le quatrième cycle d'horloge 29 du second cycle d'horloge 28, le quatrième processeur élémentaire virtuel PEV₄ effectue un accès aux données 34 par l'intermédiaire du dispositif de communication 16 et ainsi de suite.

Comme on peut le voir sur la figure 4, le dispositif de communication 16 permet de transmettre en permanence des données aux divers processeurs élémentaires virtuels.

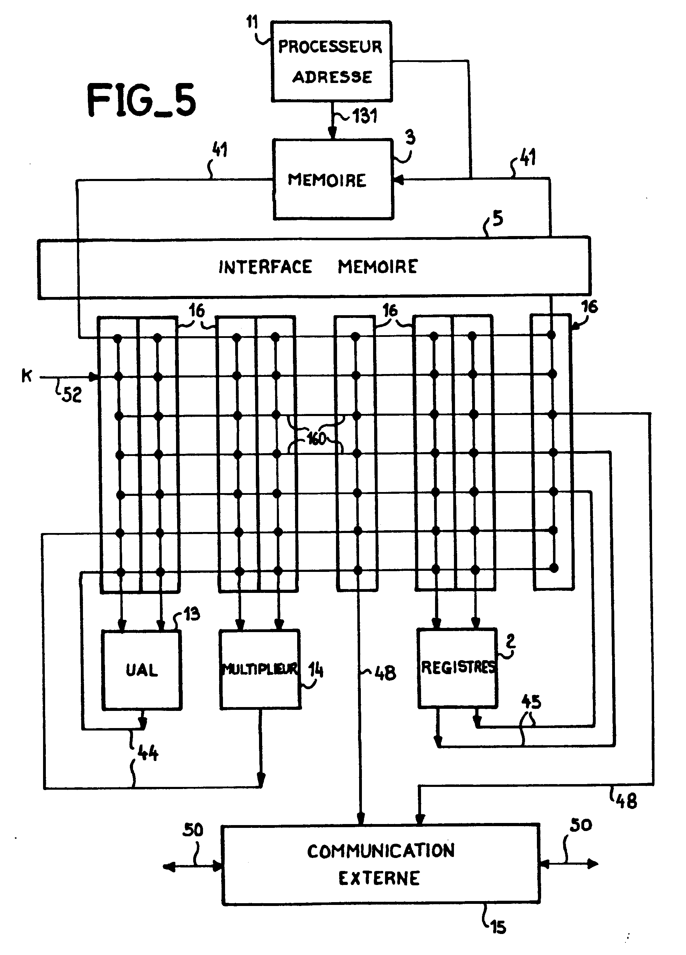

Sur la figure 5, on peut voir les transmissions des données mises en oeuvre dans un exemple de réalisation du processeur selon l'invention. Le dispositif de communication 16 est relié à deux entrées de l'unité arithmétique et logique 13, à deux entrées du multiplicateur 14, à une entrée du dispositif de communication extérieure 15, à deux entrées du banc 2 du registre 20, à une entrée de l'interface mémoire 5, à une sortie de l'interface mémoire 5, à une sortie du bus de constante 52, à une sortie de l'unité arithmétique et logique 13, à une sortie du multiplicateur 14, à deux sorties du banc 2 du registre 20, à une sortie du dispositif de communication extérieure 15. Les points 160 représentent les connexions permises à l'intérieur du dispositif de communication 16. Le dispositif de communication 16 permet, selon les instructions qu'il reçoit, les divers interconnexions désirées. Dans un exemple de réalisation le dispositif de communication 16 comporte des multiplexeurs. Dans l'exemple illustré sur la figure 5 le dispositif de communication comporte huit multiplexeurs, 7 vers 1 c'est-à-dire pouvant choisir une sortie sur sept sorties possibles.

Le dispositif de communication 16 permet ainsi au processeur selon l'invention d'exécuter divers calculs désirés. Les instructions sur les interconnexions à réaliser sont reçues soit à partir d'une mémoire de programme, soit à partir d'un séquenceur, non représentés. Le processeur d'adresse 11 est relié au bus 41 reliant l'interface mémoire 5 à la mémoire 3. Le processeur d'adresse 11 est relié par un bus d'adresse 131 à la mémoire vive 3.

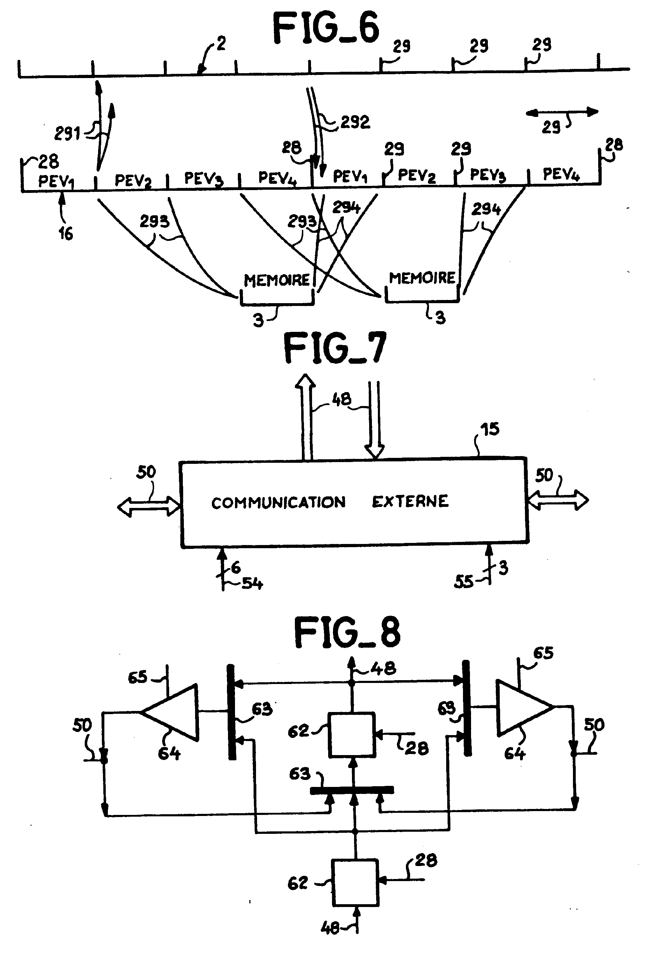

La figure 6 est une superposition d'un chronogramme en rapport avec les transferts de données lues ou à écrire dans la mémoire 3 et d'un chronogramme en rapport avec les transferts de données du banc 2 de registres 20. Dans l'exemple illustré sur la figure 6 seul les échanges, en ce qui concerne le banc 2 de registres 20 et le dispositif de communication 16 effectués pour le premier processeur élémentaire virtuel PEV₁ ont été représentés. Sur la figure 6, on a représenté les échanges entre le banc de registres 2, un exemple de la mémoire vive 3 susceptible d'effectuer une lecture et une écriture par cycle d'horloge 29, au travers du dispositif de communication 16. Le dispositif selon la présente invention comporte des registres 20 permettant la synchronisation des flots de données destinés aux processeurs élémentaires virtuels. La numérotation du processeur élémentaire virtuel indiquent pour quel processeur élémentaire virtuel travaille le dispositif de communication 16. La mémoire vive 3 est partagée en deux bancs mémoire.

A la deuxième impulsion d'horloge 29 nous avons deux transferts de donnée pour écriture 291 entre les dispositif de communication 16 et le banc de registre 2.

A la deuxième impulsion d'horloge 28 nous avons un transfert de donnée pour écriture 293 entre le dispositif de communication 16 et l'interface mémoire 5 l'écriture se faisant entre la quatrième et la cinquième impulsions 29.

A la troisième impulsion d'horloge 29 nous avons un transfert de donnée pour écriture 293 entre le dispositif de communication 16 et l'interface mémoire 5.

A la quatrième impulsion d'horloge 29 nous avons un transfert des données pour écriture 293 entre les dispositifs de communication et l'interface mémoire 5.

A la cinquième impulsion d'horloge 29, correspondant à la deuxième impulsion d'horloge 28, nous avons un transfert des données pour écriture 293 entre le dispositif de communication 16 et l'interface mémoire 5.

A la cinquième impulsion d'horloge 29 correspondant à la deuxième impulsion d'horloge 28 on opère un transfert de donnée après lecture 294 entre la mémoire 3 et le dispositif de communication 16.

A la cinquième impulsion d'horloge 29, correspondant à la deuxième impulsion d'horloge 28, on effectue deux transferts des données après lecture 292 entre le banc de registre 2 et le dispositif de communication 16.

A la sixième impulsion d'horloge 29 on effectue un transfert des données après lecture 294 entre la mémoire vive 3 et le dispositif de communication 16.

A la septième impulsion d'horloge 29 on effectue un transfert des données après lecture 294 entre la mémoire vive 3 et le dispositif de communication 16.

A la huitième impulsion d'horloge 29 on effectue un transfert des données après lecture 294 entre la mémoire vive 3 et le dispositif de communication 16.

Ainsi globalement dans le cas de l'utilisation d'un banc 2 de registre 20 comportant deux ports physiques et d'un double banc des mémoires vives 3 on effectue deux écritures et deux lectures par cycle d'horloge 28 et par processeur élémentaire virtuel, ainsi qu'une lecture et une écriture en mémoire 3 par cycle d'horloge 28 par processeur virtuel.

On obtient ainsi quatre flots de données complètement indépendants dans le processeur. L'utilisation de deux bancs de mémoires 3 permet d'effectuer des accès mémoire simultanés pour les premiers et les deuxièmes processeurs élémentaires virtuels PEV₁ et PEV₂ puis pour les troisième et quatrième processeurs élémentaires virtuels PEV₃ et PEV₄.

L'utilisation de mémoires 3 ne permettant qu'un accès unique par cycle d'horloge 29 ne sort pas du cadre de la présente invention.

Sur la figure 7, on peut voir un dispositif de communication externe 15. Le dispositif est connecté en plus du bus 48 le reliant au dispositif de communication 16 et des deux bus d'échange des données 50 deux bus de commande 54 et 55. Le bus de commande 54 est par exemple un bus de six bits, le bus de commande 55 étant un bus de trois bits. Les bus de commande 54 et 55 permettent de gérer les échanges entre processeurs 100 selon l'invention. L'information étant transmise à un processeur de proche en proche il est impératif que l'indisponibilité d'un des processeurs n'empêche pas le bus en anneau 50 de fonctionner. Sur commande le dispositif de communication externe transmet les données en court-circuitant le processeur 100 auquel ledit dispositif de communication externe appartient.

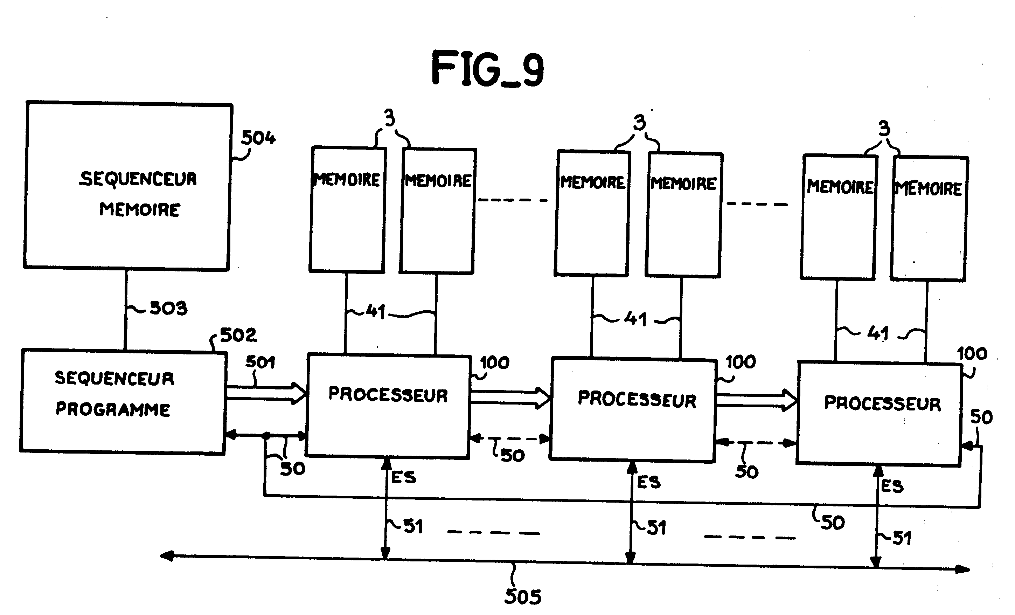

Sur la figure 8, on peut voir le schéma fonctionnel du dispositif de communication externe 15 correspondant à un processeur virtuel. Le dispositif comporte un premier multiplexeur 63 à trois entrées et une sortie. Une première entrée provient d'un premier bus 50. Une seconde entrée provient d'un second bus 50. La troisième entrée du multiplexeur 63 provient de l'arrivée du bus 48. Avantageusement, le bus 48 comporte un registre de synchronisation 62 synchronisant les impulsions d'horloge 28.

D'autre part la sortie du registre 62 est reliée, en plus du multiplexeur à trois entrées, à deux multiplexeurs à deux entrées et une sortie 63. Avantageusement, la sortie du multiplexeur 63 à trois entrées est reliée au bus 48 par l'intermédiaire d'un registre 62. La sortie du registre 62 est reliée d'une part au bus 48 et d'autre part aux secondes entrées de deux multiplexeurs 63 à deux entrées. La sortie de chacun des multiplexeurs à deux entrées successives est reliée à des opérateurs trois états 64. Les opérateurs trois états 64 permettent d'obtenir en plus de l'état logique bas et de l'état logique haut un troisième état logique présentant une impédance de sortie infinie permettant d'isoler le dispositif de communication externe 15 des bus. Le passage en impédance infinie se fait par exemple sur commande 65.

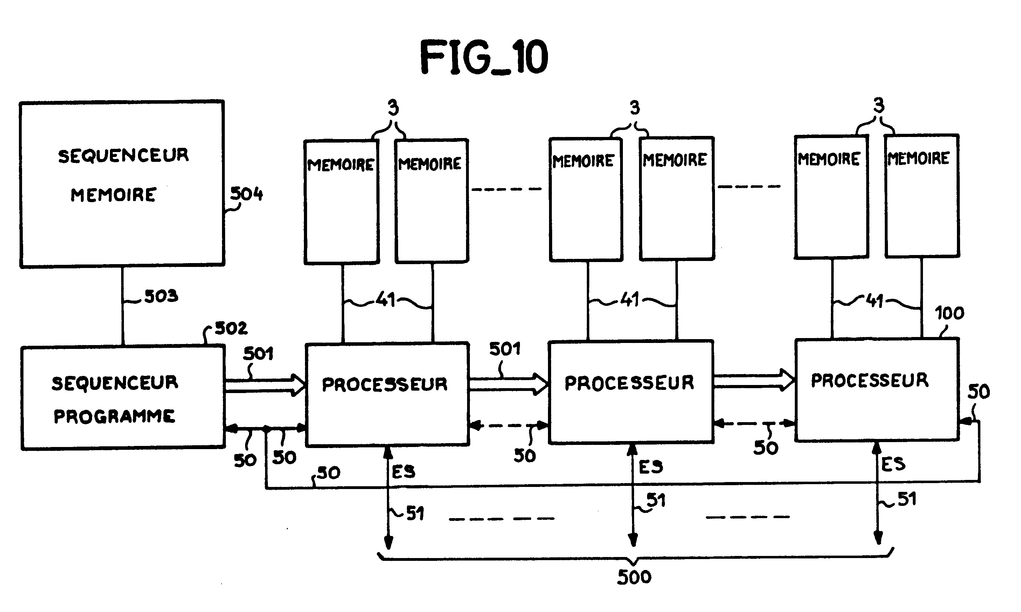

Sur la figure 9, on peut voir un ensemble de processeurs 100 selon l'invention. Chaque processeur 100 comporte une mémoire vive 3 dédiée. Par exemple chaque processeur 100 comporte un double banc de mémoire 3 relié par des bus 41. Un calculateur complet comporte par exemple seize processeurs 100 selon l'invention. Pour la clarté de la figure seuls trois processeurs ont été représentés. Les processeurs 100 sont reliés par un bus en anneau 50. Ce bus est d'autre part connecté à un séquenceur de programme 502. Le séquenceur de programme 502 permet de commander par l'intermédiaire d'un bus 501 le processeurs 100. En adressant la même commande à tous les processeurs 100 on réalise un calculateur parallèle (SIMD en terminologie anglo-saxonne). Dans un exemple de réalisation comportant un séquenceur 502 susceptible d'adresser des commandes différentes aux divers processeurs 100 on réalise une machine à instruction à données multiples (MIMD en terminologie anglo-saxonne). Avantageusement, le séquenceur de programme 502 est relié à un séquenceur mémoire 504. La mémoire du programme n'est pas représentée sur la figure 10. Dans l'exemple illustré sur la figure 9 les bus entrée sortie 51 des processeurs 100 sont reliés à un bus unique 505 susceptible d'effectuer des transmissions séquenciellement.

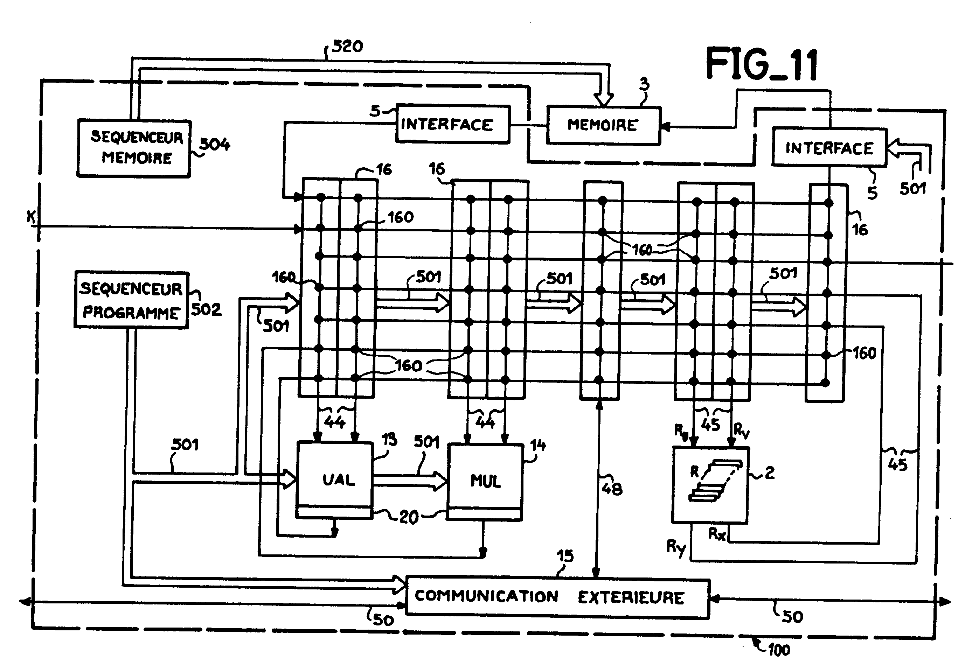

Sur la figure 10, on peut voir un calculateur selon la présente invention comportant une pluralité de processeurs 100. La variante de réalisation de la figure 11, les bus d'entrée sortie 51 des processeurs 100 sont connectés à des canaux de communication parallèle. Ainsi il est possible de faire des échanges constamment avec toutes les mémoires de tous les processeurs 100.

Sur la figure 11, on peut voir un exemple de processeur 100 selon l'invention susceptible de travailler de façon autonome. Ce processeur 100 comporte en plus des éléments représentés sur les figures 1, 3 et 5 un séquenceur mémoire 504 relié à la mémoire 3 par un bus 520 et un séquenceur programme 502 relié par un bus de commande 501 à l'unité arithmétique et logique 13, au multiplicateur 14, au dispositif de communication 16, aux dispositifs de communication extérieure 15 et à l'interface 5.

L'invention s'applique à la réalisation des calculateurs de grande puissance de calcul. L'invention s'applique notamment au traitement numérique du signal.

## Revendications

1. Processeur de calcul comportant au moins une structure pipe-line (1, 100) à n étages en série, une mémoire de données (3) et un processeur d'adresses (11), caractérisé par le fait que la mémoire de données est organisée en n modules recevant chacun un flot de données indépendant et que le processeur d'adresses adresse successivement et cycliquement chacun des n modules de la mémoire pour fournir successivement un élément de chaque flot de données à cette structure pipe-line.

2. Processeur selon la revendication 1, caractérisé par le fait qu'il comporte un banc (2) de registres (20) pour accélérer le traitement d'information.

3. Processeur selon l'une quelconque des revendications précédentes, caractérisé par le fait qu'il comporte un dispositif de communication (16) permettant, à chaque cycle d'horloge (29), des communications internes au processeur (100).

4. Processeur selon l'une quelconque des revendications précédentes, caractérisé par le fait qu'il comporte une interface mémoire (5) comportant deux bus (41) reliés à deux bancs de mémoire (3) et un bus d'entrée/sortie (51) ainsi qu'un processeur d'accès direct mémoire (12) pour permettre la lecture et/ou l'écriture dans un des bancs mémoire, l'autre banc de mémoire étant simultanément utilisé par le processeur (100).

5. Processeur selon l'une des revendications précédentes, caractérisé par le fait qu'il comporte un séquenceur (502) envoyant des instructions de commande aux structures pipe-line et/ou au dispositif de communication (16).

6. Calculateur comportant un processeur selon l'une des revendications précédentes, caractérisé par le fait qu'il comporte un bus en anneaux (50) à plusieurs structures pipe-line reliant en parallèle ces différentes structures (100).

7. Procédé d'exécution de calculs à l'aide d'un processeur comportant une mémoire (3) de données et au moins une structure pipe-line à n étages, caractérisé par le fait que l'on mémorise dans n modules de la mémoire n flots indépendants de données et que l'on adresse successivement et cycliquement chacun des n modules de la mémoire pour fournir successivement un élément de chaque flot de données à cette structure pipe-line, un cycle complet de calcul durant n impulsions d'horloge, un résultat étant délivré à chacune des n impulsions d'horloge.

## Patentansprüche

1. Rechenprozessor mit wenigstens einer Pipelinestruktur (1, 100) mit n Stufen in Reihe, einem Datenspeicher (3) und einem Adressenprozessor (11), dadurch gekennzeichnet, daß der Datenspeicher in n Modulen organisiert ist, die jeweils einen unabhängigen Datenstrom empfangen, und daß der Adressenprozessor jedes der n Module des Speichers nacheinander und zyklisch adressiert, um nacheinander dieser Pipelinestruktur ein Element jedes Datenstroms zu liefern.

2. Prozessor nach Anspruch 1, dadurch gekennzeichnet, daß er eine Bank (2) aus Registern (20) aufweist, um die Informationsverarbeitung zu beschleunigen.

3. Prozessor nach einem der vorhergehenden Ansprüche, dadurch gekennzeichnet, daß er eine Kommunikationseinrichtung (16) aufweist, die bei jedem Taktzyklus (29) interne Kommunikationen im Prozessor (100) ermöglicht.

4. Prozessor nach einem der vorhergehenden Ansprüche, dadurch gekennzeichnet, daß er eine Speicherschnittstelle (5) mit zwei Bussen (41), die mit zwei Datenbanken (3) verbunden sind, und mit einem Eingangs-Ausgangs-Bus (51) sowie einen Direktzugriffsspeicherprozessor (12) aufweist, um das Auslesen und/oder das Einschreiben in einer der Speicherbanken zu ermöglichen, wobei die andere Speicherbank gleichzeitig von dem Prozessor (100) verwendet wird.

5. Prozessor nach einem der vorhergehenden Ansprüche, dadurch gekennzeichnet, daß er eine Ablaufsteuerung (502) aufweist, die Steueranweisungen an die Pipelinestrukturen und/oder die Kommunikationseinrichtung (16) schickt.

6. Rechner mit einem Prozessor nach einem der vorhergehenden Ansprüche, dadurch gekennzeichnet, daß er einen ringförmigen Bus (50) mit mehreren Pipelinestrukturen aufweist, der diese verschiedenen Strukturen (100) parallel verbindet.

7. Verfahren zur Abarbeitung von Rechnungen mit Hilfe eines Prozessors mit einem Datenspeicher (3) und wenigstens einer Pipelinestruktur mit n Stufen, dadurch gekennzeichnet, daß in n Modulen des Speichers n unabhängige Datenströme gespeichert werden, und daß nacheinander und zyklisch jedes der n Module des Speichers adressiert wird, um nacheinander ein Element jedes Datenstroms an diese Pipelinestruktur zu liefern, wobei ein vollständiger Rechenzyklus n Taktimpulse dauert und bei jedem der n Taktimpulse ein Ergebnis geliefert wird.

## Claims

1. Computational processor including at least one pipeline structure (1, 100) with n stages in series, a data memory (3) and an address processor (11), characterized in that the data memory is organized as n modules each receiving an independent data stream and in that the address processor successively and cyclically addresses each of the n modules of the memory in order to supply successively an element of each data stream to this pipeline structure.

2. Processor according to Claim 1, characterized in that it includes a bank (2) of registers (20) in order to speed up the information processing.

3. Processor according to any one of the preceding claims, characterized in that it includes a communication device (16) allowing, with each clock cycle (29), communications internal to the processor (100).

4. Processor according to any one of the preceding claims, characterized in that it includes a memory interface (5) including two buses (41) connected to two memory banks (3) and an input/output bus (51) as well as a direct memory access processor (12) in order to allow the reading from and/or the writing to one of the memory banks, the other memory bank being used simultaneously by the processor (100).

5. Processor according to one of the preceding claims, characterized in that it includes a sequencer (502) sending control instructions to the pipeline structures and/or to the communication device (16).

6. Computer including a processor according to one of the preceding claims, characterized in that it includes a ring bus (50) with plural pipeline structures connecting these various structures (100) in parallel.

7. Process for executing computations with the aid of a processor including a data memory (3) and at least one pipeline structure with n stages, characterized in that n independent data streams are stored in n modules of the memory and in that each of the n modules of the memory is successively and cyclically addressed in order to supply successively an element of each data stream to this pipeline structure, a complete cycle of computation lasting n clock pulses, one result being delivered on each of the n clock pulses.
